# EUROPEAN PATENT SPECIFICATION

(11) **EP 0 597 811 B1**
(45) Date of publication and mention of the grant of the patent: **16.04.1997**
(21) Application number: 93830449.0
(22) Date of filing: 08.11.1993
(51) Int. Cl.: G07C 5/08, G01D 1/00

(54) **Sailing data recorder (S.D.R.), for the research of the causes of marine accidents**
Parameterregistriergeraet für die Seeschiffahrt zur Emittlung von Schiffsunfallursachen
Enregistreur des paramètres de la navigation navale pour la recherche des causes des accidents maritimes

(30) Priority: 11.11.1992 IT ME920012
(43) Date of publication of application: 18.05.1994
(73) Proprietor: Furnari, Salvatore, I-98100 Messina (IT)
(72) Inventor: Furnari, Salvatore, I-98100 Messina (IT)
(74) Representative: Polte, Willi, Dr.-Ing.

(56) References cited:
- DE-A- 3 207 127
- GB-A- 2 164 825
- US-A- 5 053 967

## Description

The invention relates to a sailing data recorder according to the preamble of claim 1.

Data recorders are well-known in the art.

Document DE-A-3207127 discloses a sailing data recorder comprising a radio buoy and a tape recorder for recording the bridge commands of a vessel.

The US-A-5,053,967 concerns a flight recorder comprising memory means for storing flight informations.

Document GB-A-2164825 relates to an access control equipment for restricting unauthorised access to stored or transmitted data.

The sailing data recorder, according to the invention, is designed to acquire, process, format and record on static electronic memories, the various parameters from up to 256 peripheral devices and record on magnetic tape bridge and machinery control room voices, storing the last 24 hours of recording.

The storing capacity can be increased simply increasing the Integrated RAM Memories.

The invention is a rectangular unit with a small size, about 250 mm x 250 mm x 200 mm, and can be effortlessly installed in all ships in a short time due to the facile connection with advanced automation systems, for old automation systems after low cost rearrangements.

The S.D.R. (Sailing Data Recorder) is located in a sheltered and dedicated zone to better protect the various parameters recorded.

Very cheap, it is the only equipment reliable to ascertain the causes of marine accidents, it is also a new instrument for the international maritime organisations involved in ship safety, reliable to check periodically from land the safety standard of the ships. In fact, by satellite phone line connection using definite passwords it is possible, in real time, to access to the equipment memories to prevent marine accident.

Marine systems for cargo, machinery and bridge control have been developed with the relevant functions of command, alarm and governing, yet these systems have the following inconveniences:
quite the totality of them only activate visual or audible alarms and governing procedures. Only few have printing or displaying ability to evidence the alarm signals. The technique of recording and storing in a protected zone the signals in the event of marine accidents has practically never been used yet.

The control of such parameters is therefore carried out with marine conventional techniques aiming at regulating the functions or evidencing the alarm signals, often by means of equipment very difficult to interconnect, all that determines a low efficiency of the acquisition unit, when present, or, even more, the impossibility to collect some basic data.

Furthermore in some of the rare equipment placed in automation system and able to record only few data, in the event of marine accident e.g. flooding, fire etc., etc., the records would be completely lost with the impossibility to ascertain the causes of the accident.

In summary, some basic data useful at this purpose have been, up to now, absolutely ignored:
a- bridge and machinery control room voices;
b- navigation and environment data;
c- cargo data related to ships stability and strength, for which under valuation is often cause of very serious accidents with lives lost and marine pollution.

These basic data, together with the machinery and emergency data make possible to take into account all the parameters concurring to ships integrity.

For the research of the causes of marine accident, the storing in a protected zone of the records of the above mentioned data is absolutely necessary.

The importance to access to this equipment memories, in real time, to check periodically from land the safety standard of the ships, to prevent accidents, has not yet been realised by the international maritime organisations involved in ship safety.

In conclusion, up to now, the existing black boxes have been designed as owners' support to increase the ship performances, e.g. machinery supervision and monitoring, and to check the crews work; until today the lack of such an equipment has not allowed a proper procedure to prevent, research and evaluate the causes of marine accidents.

The invention seeks to provide an equipment reliable to solve the above mentioned inconveniences and give a contribution in decreasing marine accidents by means of the following actions:
1- to decodify the stored record to clearly ascertain the causes of the accident as requested by the SOLAS 74 convention.
2- to provide the organisations involved at ship safety with an equipment able to access to the memories during the ship route and check periodically from land the safety standard of ships, therefore able to know deficiencies and evaluate their seriousness and, by means of appropriate rules to be issued, prevent marine accidents.
3- to provide the world's fleet a unique safety standard, today very different among the states and often depending on the crews nationality.

These actions can easily be fulfilled in a optimum way without cost increasing by means of a S.D.R. (Sailing Data Recorder) which consists of::
1) Power supply;
2) Microprocessor board;
3) Digital interface board;
4) Analog to digital interface board;
5) System memory board EPROM;
6) RAM memory with stand-by power supply;
7) Tape recorder;
8) Control panel;
9) Submarine transmitter;
10) RS 232 interface;

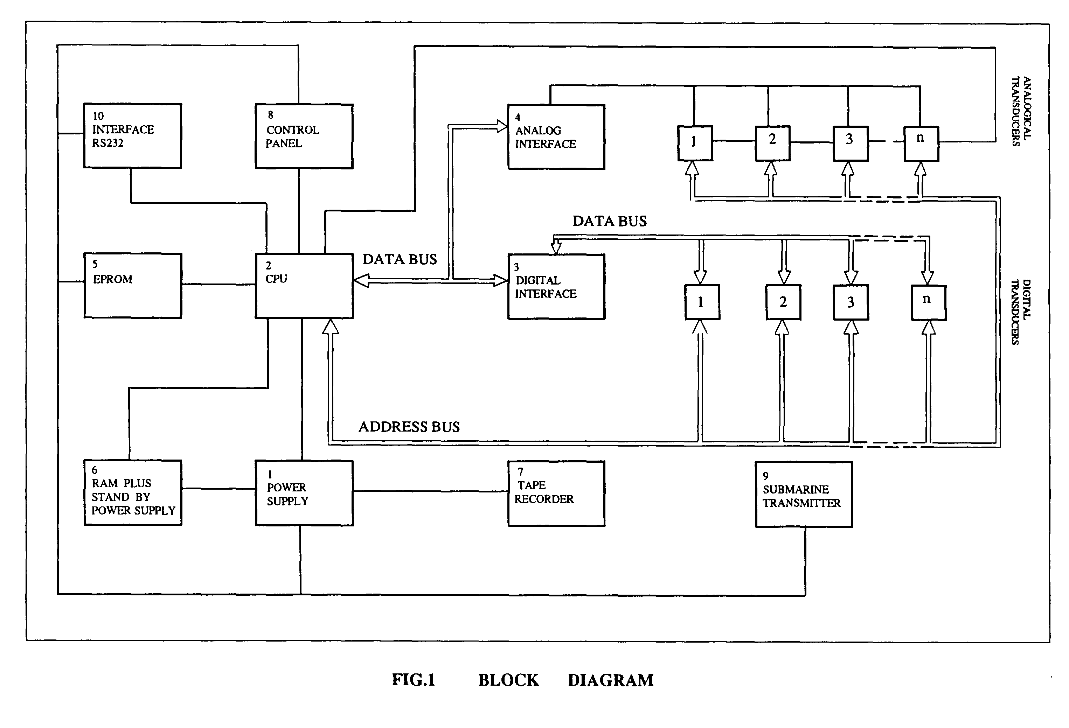

The invention will now be described with reference to the accompanying drawing, fig.1, and the enclosed table 1; the description we are going to illustrate is only a preferred, practical realisation just to give an example and it does not want to restrict all the possible technical and constructive realisations which can be carried out without departing from the invention, as defined by the claims.

The equipment consists of all the assemblies shown in fig.1. The Power supply (1) is supplied by the ship main network (220 V ac.),with one dedicated input, or by a 24 V dc.

All the other needed voltages for the equipment are internally derived by DC/DC highly reliable converters.

All power supplies, ±15 V dc, + 5 V dc, are controlled and monitored, if some of these fails, the alarm led in the control panel switchs on. The Power supply (1) supplies also the accumulators for the RAM memory (6) in which data from the receivers are stored.

Each transducer has one address selector; only when the µprocessor gives the correct address the transducer is able to put its data on the bus. The transducers are connected with the bus via three - state coupling devices.

The equipment has one digital interface board (3), which collects the data from the ON/OFF type transducers. The inputs are provided with optical-isolator devices which assure the necessary separation from the external circuits. The analog to digital converter (4) consists of an A/D 12 bit fast converter with 0.01 % precision and a typical conversion time of 15 µsec.

Analogic data flow to this board through a programmable filter, and are converted into a digital format to drive the output latch for recording.

All the peripheral signals coming from the transducers are treated by the CPU board (2) and stored in the RAM (6).

The 80286 µprocessor is built on the CPU board (2); the clock frequency is 12 MHz. On the board (5) the 256 K system memory with the operating software (EPROM) is mounted. There is also a time and date generating device which is requested by the CPU to put its data on the bus at fixed times. The CPU knows if the signal to be treated is an analogical or a digital signal. Table 1 in page 9 shows a list of signals with their range and sample rate.

The address bus consists of 8 parallel lines, tested for integrity by the CPU, and it is possible to address 256 different devices.

The signals are grouped together in different rates with regards to their acquisition timing, i.e.,1 minute, 3, 6 and 60 minutes groups as shown in table 2.

**Tab.2**

| RATE (min) | ANALOG. | TOTAL/HOUR |
|---|---|---|
| 1 | 10 | 600 |
| 3 | 20 | 400 |
| 6 | 8 | 80 |
| 60 | 4 | 4 |
| | | 1084 |

The accuracy requested is 10 bits (2 ¹⁰=1024), so 10 **Kb** / recording hr are necessary. An interrupt logic ensures the ON/OFF signals recording; they are decodified and recorded with the address of the corresponding device.

RAM memory (6 ) is the RAM memory board with the storage battery. On this board there are allocated the memory chips for data recording. Sailing parameters data coming from the external transducers are stored in accordance with programmed procedures. A storage battery ensures the data integrity for a time depending on the battery power.

Block n.7 is the voice recorder; it is a conventional equipment with magnetic tape; with this unit it is possible to record analogically the voices coming from machinery control room and from the bridge, they are detected by means of high sensitivity microphones conveniently placed.

Block n.8 is the control panel on the bridge, through which the crew can check the main S.D.R. functions.

**The main indicators are:**
- power supply indicator led;
- CPU HALT indicator led;
- data bus integrity indicator led;
- address bus integrity indicator led;
- date and time display;
- led check push-button;
- date and time updating push-button.

Block n.9 is the submarine transmitter. It can transmit with an appropriate frequency for 30 days to allow the help boats to find the equipment in case of accident.

Block n.10 is the RS232 interface board; with this device coupled with a modem it is possible to realise a remote control; by satellite phone line the recorded parameters can be transmitted for remote control of ship sailing parameters to check the safety standard of the ship.

**TABLE 1**

| PARAMETER | FUNCTION | UNIT | RANGE | STEP | TIMING |
|---|---|---|---|---|---|
| Girocompass | Course | Degree | 0 .. 360 | 0.5 | 1 min |
| Speed indicator | Speed | knot | -10 .. +30 | 0.5 | 6 min |
| Echo-sounding device | Depth | meter | 0 .. 45 | 0.010 | 1 min |
| Navigation system | lat. posit | degree | -90 +90 | 0.001 | 1 min |
| | long. posit | degree | -180 +180 | 0.001 | 1 min |
| Rudder angle | Rudder angle | degree | -35 .. +35 | 0.5 | 1 min |
| Meteo unit | Wind-dir | degree | 0 360 | 10° | 1 hour |
| | Wind-speed | knot | 0 80 | 1 | 1 min |
| | temperature | grade C° | -40 +60 | 1° | 1 hour |
| | rel. umidity | % | 0 100 | 0.5 | 1 hour |
| | atm pressure | millibar | 900 1050 | 1 | 1 hour |
| Radar | target | mile | 0 12 | +/- 6 m | 6 min |
| | target | degree | -180 +180 | 0.5 | 6 min |
| Cargo computer | Depth | meter | 0 .... 40 | 0.1 | 6 min |
| | heeling | degree | -30 .. +30 | 0.5 | 1 min |
| | Xg position | meter | 0 ... 300 | 0.1 | 6 min |
| | Yg position | meter | 0 ... 300 | 0.1 | 6 min |
| | Zg position | meter | 0 ... 300 | 0.01 | 6 min |
| Stability | GM | meter | 0 3 | 0.01 | 1 min |
| Cargo panel | cargo level | meter | 0 .... 60 | 0.1 | 6 min |
| Inert gas panel | tanks | 02 % | 21 | 1 | 1 min |
| | inertization | mm H₂O | 250.....1000 | 1 | 1 min |
| Machinery computer | analogical unit | | 20 | | 3 min |
| | on/off unit | | 20 | | |
| Emergency panel | Fire | | 20 | ON OFF | |
| | Damage | | 20 | ON OFF | |
| | Subdivision | | 20 | ON OFF | |
| | Black out | | | ON OFF | |
| Strenght | Shearing stress by load master | | | ON OFF | |
| | Bending moment by load master | | | ON OFF | |
| Toxic gases | gas detector alarm | | | ON OFF | |
| Others ........ | | | | | |

## Claims

1. A sailing data recorder for seagoing ships, having memory means, comprising a voice recorder for storing bridge and machinery control room voices,
characterized by
navigation-, environment- and cargo-data transducers, i.e. transducers for detecting data related to stability and strength of the ship, cargo levels, and/or other data concerning the ship's type and external information,
a static electronic navigation-data memory,
a static electronic environment-data memory,
a static electronic cargo-data memory and
a microprocessor for processing the data from said transducers, and storing the results in said memories.

2. A sailing data recorder according to claim 1, characterized by an interface means (3, 4) to convert the output signals of the transducers (1, 2...n) in appropriate digital signal format.

3. A sailing data recorder according to claim 1 or 2, characterized by an interface means (10) allowing remote access to the stored data.

4. A sailing data recorder according to anyone of claims 1 to 3, characterized by a submarine transmitter which is automatically activated when immersed.

5. A sailing data recorder according to anyone of the preceeding claims and located in a sheltered zone of the vessel in order to protect the recorded parameters.

6. A sailing data recorder according to anyone of claims 1 to 5, characterized in that said cargo-data comprising the depth, heeling, X_{g}-position, Y_{g}-position, Z_{g}-position, GM, cargo level and strength of the ship.

## Patentansprüche

1. Seeschiffahrtsparameterregistriergerät für hochseetüchtige Schiffe mit einer Speichereinrichtung, die ein Tonregistriergerät zum Speichern von Tönen aus dem Brücken- und Maschinensteuerraum hat, gekennzeichnet durch
Navigations-, Umgebungs- und Ladungsparametermeßwertaufnehmer, d.h. Meßwertaufnehmer zum Detektieren von Parametern, die auf die Stabilität und die Festigkeit des Schiffes bezogen sind, von Ladungsniveaus und/oder von anderen Parametern, die den Schiffstyp und externe Informationen betreffen,
einen statischen, elektronischen Navigationsparameterspeicher,
einen statischen, elektronischen Umgebungsparameterspeicher
einen statischen, elektronischen Ladungsparameterspeicher und
einen Mikroprozessor zum Verarbeiten der Parameter von den Meßwertaufnehmern und zum Speichern der Resultate in diesen Speichern.

2. Seeschiffahrtsparameterregistriergerät gemäß Anspruch 1, gekennzeichnet durch eine Schnittstelleneinrichtung (3, 4), um die Ausgabesignale der Meßwertaufnehmer (1, 2...n) in geeignete Digitalsignalformate zu wandeln.

3. Seeschiffahrtsparameterregistriergerät gemäß Anspruch 1 oder 2, gekennzeichnet durch eine Schnittstelleneinrichtung (10), die einen Fernzugang zu den gespeicherten Parametern erlaubt.

4. Seeschiffahrtsparameterregistriergerät gemäß einem der Ansprüche 1 bis 3, gekennzeichnet durch einen Unterwassersender, der automatisch aktivierbar ist, wenn er versenkt ist.

5. Seeschiffahrtsparameterregistriergerät gemäß einem der vorherigen Ansprüche und in einem geschützten Bereich des Schiffes angeordnet, um die aufgenommenen Parameter zu schützen.

6. Seeschiffahrtsparameterregistriergerät gemäß einem der Ansprüche 1 bis 5, dadurch gekennzeichnet, daß die Ladungsparameter die Tiefe, die Seitenneigung, die X_{g}-Position, die Y_{g}-Position die Z_{g}-Position, GM, das Ladungsniveau und die Festigkeit des Schiffes enthalten.

## Revendications

1. Enregistreur de données de navigation pour des navires de mer, ayant des moyens à mémoire, comportant un enregistreur vocal pour la mémorisation de voix de la passerelle et de la salle de commande des machines,
caractérisé par
des transducteurs de données concernant la navigation, l'environnement et la cargaison, c'est-à-dire des transducteurs destinés à détecter des données liées à la stabilité et à la résistance du navire, aux niveaux de cargaison et/ou d'autres données concernant le type de navire et des informations extérieures,
une mémoire électronique statique de données de navigation,
une mémoire électronique statique de données concernant l'environnement,
une mémoire électronique statique de données concernant la cargaison, et
un microprocesseur destiné à traiter les données provenant desdits transducteurs, et à stocker les résultats dans lesdites mémoires.

2. Enregistreur de données de navigation selon la revendication 1, caractérisé par un moyen d'interface (3, 4) destiné à convertir les signaux de sortie des transducteurs (1, 2...n) en un format approprié de signaux numériques.

3. Enregistreur de données de navigation selon la revendication 1 ou 2, caractérisé par un moyen d'interface (10) permettant un accès à distance aux données stockées.

4. Enregistreur de données de navigation selon l'une quelconque des revendications 1 à 3, caractérisé par un émetteur sous-marin qui est activé automatiquement lorsqu'il est immergé.

5. Enregistreur de données de navigation selon l'une quelconque des revendications précédentes et placé dans une zone abritée du navire pour protéger les paramètres enregistrés.

6. Enregistreur de données de navigation selon l'une quelconque des revendications 1 à 5, caractérisé en ce que lesdites données concernant la cargaison comprennent la profondeur, la gîte, la position X_{g}, la position Y_{g}, la position Z_{g}, la valeur GM, le niveau de cargaison et la résistance du navire.
